# EUROPEAN PATENT APPLICATION

(11) **EP 4 561 177 A1**
(43) Date of publication of application: **28.05.2025**
(21) Application number: 22952018.4
(22) Date of filing: 22.07.2022
(51) Int. Cl.: H04W 36/18, H04W 48/16, H04W 84/06

(54) **TRANSITION TO CONNECTION STATUS OF COMMUNICATION DEVICE ACCORDING TO BASE STATION OPERATION SCHEDULE**

(71) Applicant: Rakuten Mobile, Inc., Tokyo 158-0094 (JP)
(72) Inventor: AOYAGI Kenichiro, Tokyo 158-0094 (JP); KITAGAWA Koichiro, Tokyo 158-0094 (JP); SHETE Pankaj, Tokyo 158-0094 (JP); MUHAMMAD Awn, Tokyo 158-0094 (JP)
(74) Representative: Betten & Resch
(86) International application number: PCT/JP2022/028523
(87) International publication number: WO 2024/018634

(57) **Abstract**

A communication control apparatus includes at least one processor that performs: by an operating plan acquisition unit, acquiring an operating plan of a base station; by a communication device identification unit, identifying a communication device in a connection standby state with the base station, which may transfer to a unconnectable state with the base station according to the operating plan; and by a connection control unit, causing the communication device to transfer from the connection standby state to a connected state with the base station and/or another base station, before transferring to the unconnectable state. The base station is a moving base station that moves relative to a communication device, and the operating plan acquisition unit acquires a moving plan of the moving base station.

## Description

### BACKGROUND OF THE INVENTION

### 1. Field of the Invention

The present disclosure relates to transfer of communication device to connected state according to operating plan of base station.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for mobile or portable communication devices such as smartphones and cell phones (hereinafter collectively referred to as "communication device(s)") are usually constructed by communication cells (hereinafter referred to as "terrestrial communication cell(s)") provided by base stations installed on the ground (hereinafter referred to as "terrestrial base station(s)"). However, in some areas, it was difficult to install a sufficient number of terrestrial base stations for various reasons, resulting in a relatively low quality of mobile communications.

In order to solve the issue of the disparity in mobile communication quality among different regions and the so-called "out-of-range" issue, where mobile communication devices cannot communicate in some regions, non-terrestrial networks (NTN) have been considered. In NTN, communication satellites or unmanned aircrafts flying in outer space or the atmosphere, such as the stratosphere, are used as base stations (hereinafter referred to as non-terrestrial base station(s), and especially communication satellites are referred to as satellite base station(s)). The non-terrestrial base station provides a communication cell on the ground (hereinafter referred to as non-terrestrial communication cell(s), and especially communication cells provided by communication satellites are referred to as satellite communication cell(s)). A communication device in a non-terrestrial communication cell communicates with a non-terrestrial base station directly or indirectly via other communication devices. By providing non-terrestrial communication cells in areas where terrestrial communication cells are not sufficient, the quality of mobile communication in such areas can be improved.

Patent Literature 1: JP-A-2010-278886

### SUMMARY OF THE INVENTION

If a moving base station, represented by a communication satellite, moves relative to a communication device, the communication device may transfer from "in range" of the moving base station to "out of range" of the moving base station. If a large number of communication devices suddenly become "out of range" due to the movement of the moving base station, they will search for other available base stations simultaneously for attempting to connect, resulting in an intensive increase of the signal processing workload on the network side. A similar situation can occur, for example, if a base station with limited operating time transfers from an operating state to a non-operating state.

The present disclosure was made in consideration of this situation, and its purpose is to provide a communication control apparatus and the like that can alleviate the concentration of signal processing workload caused by change of operating state of a base station.

In order to solve the above issue, a communication control apparatus in a certain aspect of the present disclosure includes at least one processor that performs: by an operating plan acquisition unit, acquiring an operating plan of a base station; by a communication device identification unit, identifying a communication device in a connection standby state with the base station, which may transfer to a unconnectable state with the base station according to the operating plan; and by a connection control unit, causing the communication device to transfer from the connection standby state to a connected state with the base station and/or another base station, before transferring to the unconnectable state.

According to this aspect, a communication device in a connection standby state (hereinafter also referred to as an idle state) with the base station, is caused to transfer from the connection standby state to the connected state, before transferring to the unconnectable state with the base station. In this way, a communication device can start searching for other base stations before becoming "out of range" (the unconnectable state), therefore alleviating the concentration of signal processing workload on the network side.

Another aspect of the present disclosure is a communication control method. The method includes: acquiring an operating plan of a base station; identifying a communication device in a connection standby state with the base station, which may transfer to a unconnectable state with the base station according to the operating plan; and causing the communication device to transfer from the connection standby state to a connected state with the base station and/or another base station, before transferring to the unconnectable state.

Further another aspect of the present disclosure is a computer-readable medium. The computer-readable medium stores a communication control program causing a computer to perform: acquiring an operating plan of a base station; identifying a communication device in a connection standby state with the base station, which may transfer to a unconnectable state with the base station according to the operating plan; and causing the communication device to transfer from the connection standby state to a connected state with the base station and/or another base station, before transferring to the unconnectable state.

In addition, any combination of the above components, and any conversion of the expression of the present disclosure among methods, devices, systems, recording media, computer programs and the like are also encompassed within this disclosure.

According to the present disclosure, the concentration of signal processing workload caused by change of operating state of a base station can be alleviated.

### BRIEF DESCRIPTION OF THE DRAWINGS

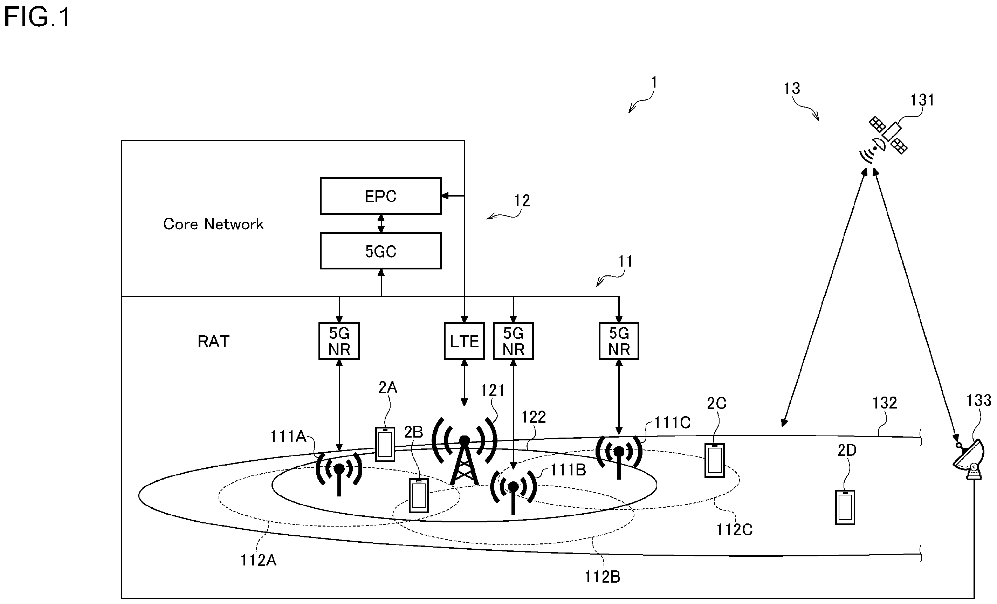

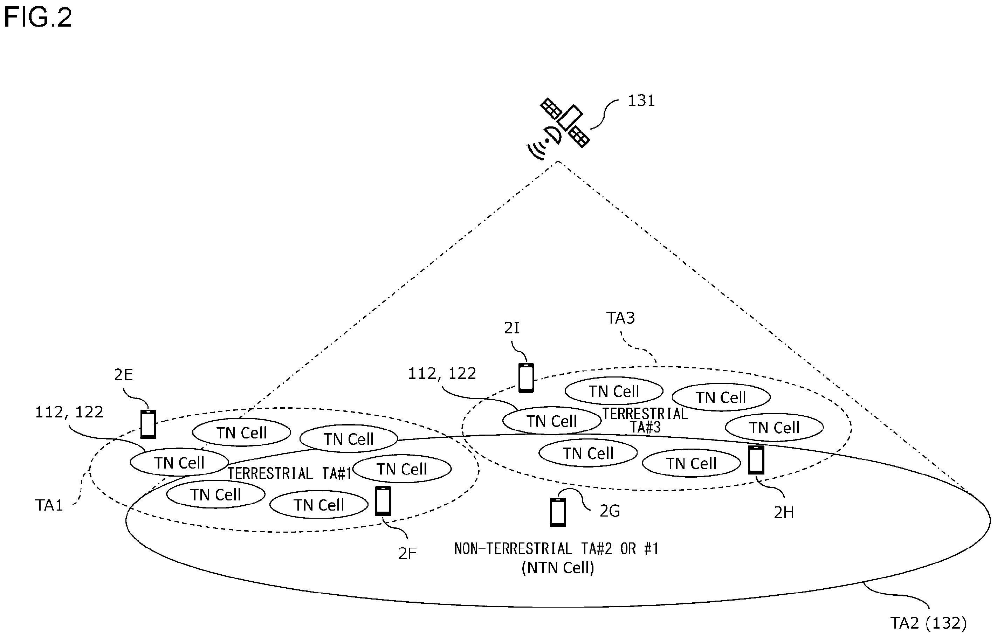

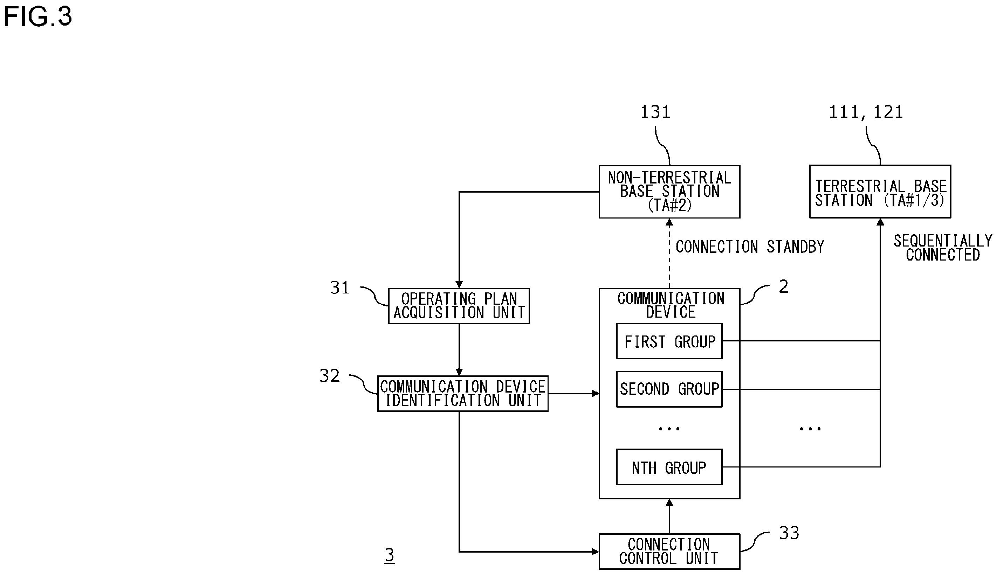

Figure 1 schematically shows the overview of a wireless communication system to which the communication control apparatus is applied. Figure 2 schematically shows an example of a location registration area composed of terrestrial communication cell and non-terrestrial communication cell. Figure 3 is a functional block diagram of the communication control apparatus.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g., 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1) installed on the ground that can communicate with the communication device 2 by LTE or LTE-Advanced. The base station 121 in 4G is referred to as eNodeB (eNB). Similarly to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similarly to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similarly to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is composed by the communication satellites 131 as non-terrestrial base stations or satellite base stations, and the terrestrial network TN, which is composed by the terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g., about 20 km above the ground) atmosphere may be used as a non-terrestrial base station in addition to or instead of the communication satellite 131.

Figure 2 schematically shows an example of a location registration area or tracking area (denoted as "TA" in Figure 2) composed of the terrestrial communication cells 112 and 122 (denoted as "TN Cell" in Figure 2) provided on the ground by terrestrial base stations 111 and 121 installed on the ground and non-terrestrial communication cells 132 (denoted as "NTN Cell" in Figure 2) provided on the ground by flying non-terrestrial base stations 131. The location registration area or the tracking area is provided to track or detect the approximate location of a communication device 2. Each location registration area is composed of one or more base stations 111, 121, 131. Specifically, the entire (or aggregated) area of each communication cell 112, 122, 132 provided on the ground by each base station 111, 121, 131 corresponds to each of the location registration areas. For example, one mobile network operator (MNO) in Japan covers the entire country with several tens of location registration areas.

In Figure 2, the first location registration area TA1 is composed of one or more (multiple in Figure 2) geographically adjacent or nearby terrestrial communication cells 112, 122. The second location registration area TA2 is composed of one or more (one in Figure 2) geographically adjacent or nearby non-terrestrial communication cells 132. The third location registration area TA3 is composed of one or more (multiple in Figure 2) geographically adjacent or nearby terrestrial communication cells 112, 122.

Each location registration area TA1 to TA3 is assigned a code or ID that uniquely identifies the location registration area, which is called TAC (Tracking Area Code) and simply denoted as "#1" to "#3" in Figure 2. Specifically, the TAC or ID of the first location registration area TA1 is "#1", the TAC or ID of the second location registration area TA2 is "#2", and the TAC or ID of the third location registration area TA3 is "#3". However, as described below, the TAC or ID of the second location registration area TA2 may be set to "#1", the same as the first location registration area TA1. In this way, one location registration area may include communication cells of different types (terrestrial communication cells 112, 122 and non-terrestrial communication cell 132). In the example of Figure 2, the communication device 2E is in the first location registration area TA1, the communication device 2F is in the overlapping area of the first location registration area TA1 and the second location registration area TA2, the communication device 2G is in the second location registration area TA2, the communication device 2H is in the overlapping area of the second location registration area TA2 and the third location registration area TA3, and the communication device 2I is in the third location registration area TA3 (In the following, communication devices 2E to 2I are also collectively referred to as communication device(s) 2).

If a moving base station, represented by the communication satellite 131, moves relative to the communication device 2 (in Figure 2, especially the communication devices 2F, 2G, 2H within the satellite communication cell 132), the communication device 2 may become outside the satellite communication cell 132 as a moving communication cell, transferring from "in range" of the communication satellite 131 to "out of range" of the communication satellite 131. If a large number of communication devices 2 suddenly become "out of range" due to the movement of the moving base station, they will search for other available base stations (e.g., 5G base station 111 or 4G base station 121) simultaneously for attempting to connect, resulting in an intensive increase of the signal processing workload on the core network side.

In particular, in case where TAC "#2" of the second location registration area TA2 constituted by non-terrestrial communication cell 132 is different from TAC "#1" of the first location registration area TA1 and TAC "#3" of the third location registration area TA3 constituted by terrestrial communication cells 112, 122, the communication devices 2 (2F, 2G, 2H) becoming "out of range" of the non-terrestrial communication cell 132 will simultaneously register or connect to the terrestrial communication cells 112, 122. This involves a lot of location registration area changes ("#2" to "#1" or "#2" to "#3"), causing a large number of area change notifications or location registration area update notifications (TA Update: Tracking Area Update) that must be processed on the core network side. As a result, the signal processing workload on the core network side further increases.

A similar situation can occur, for example, if a base station 111, 121, 131 with limited operating time transfers from an operating state to a non-operating state. In other words, when a base station 111, 121, 131 transfers to the non-operating state, a large number of communication devices 2 may simultaneously transfer from "in range" to "out of range" of the base station 111, 121, 131, and the signal processing workload on the core network side may intensively increase. The purpose of the present embodiment is to provide a communication control apparatus 3 that can alleviate the concentration of signal processing workload on the core network side caused by change of operating state of a base station 111, 121, 131 as described above. It should be noted that the "operating state" of the base station 111, 121, 131 is a concept that is not limited to the operating state or the non-operating state in the narrow sense described above, but also encompasses the position or movement state of a moving base station moving in the air or on the ground.

Figure 3 is a functional block diagram of the communication control apparatus 3 according to the present embodiment. The communication control apparatus 3 includes an operating plan acquisition unit 31, a communication device identification unit 32, a connection control unit 33. Some of these functional blocks can be omitted as long as the communication control apparatus 3 can realize at least some of the operations and/or the effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in the present embodiment, some or all of functional blocks of the communication control apparatus 3 may be realized in a centralized or a distributed manner by computer or processor provided in the communication device 2, the base stations 111, 121, 131, and the core network (not shown) .

In the example shown in the figure, groups of communication devices 2 in an idle state (a connection standby state) with the non-terrestrial base station 131 are sequentially connected to the terrestrial base station 111, 121 before the non-terrestrial base station 131 goes "out of range". However, the scope of application of the present disclosure is not limited to the example shown in the figure. For example, the "pre-transfer" base station, which in the illustrated example is the flying non-terrestrial base station 131, may be the terrestrial base station 111, 121 which is fixedly installed on the ground, or a ground moving base station (not shown) which moves on the ground. Similarly, the "post-transfer" base station (another base station), which in the illustrated example is the terrestrial base station 111, 121 which is fixedly installed on the ground, may be the flying non-terrestrial base station 131, or a ground moving base station (not shown) which moves on the ground.

The operating plan acquisition unit 31 acquires an operating plan of the "pre-transfer" non-terrestrial base station 131. Specifically, the operating plan acquisition unit 31 acquires the moving plan of the non-terrestrial base station 131 as a moving base station that moves relative to the communication device 2, or the operating time of the non-terrestrial base station 131. The moving plan of the non-terrestrial base station 131 is managed on the core network side in the form of ephemeris information, operation information and the like of the communication satellite 131, for example. Such ephemeris information and the like may be acquired from a GPS module and the like installed in the communication satellite 131 itself, or from a positioning module that remotely measures position of the communication satellite 131. Besides, the operating time of the non-terrestrial base station 131 is managed on the core network side in the form of an operating schedule and the like including the operating time (uptime) and the non-operating time (downtime) of the communication satellite 131, for example. Such an operating schedule and the like may be notified from the communication satellite 131 itself or the core network to the terrestrial base station 111, 121, the gateway 133, the communication device 2 and the like.

The communication device identification unit 32 identifies one or more communication devices 2 in a connection standby state (an idle state) with the "pre-transfer" non-terrestrial base station 131, which may transfer to a unconnectable state with the non-terrestrial base station 131 according to the operating plan of the non-terrestrial base station 131 acquired by the operating plan acquisition unit 31. For example, the communication device identification unit 32 identifies a communication device 2 in a connection standby state (an idle state) with the non-terrestrial base station 131 as the moving base station, which may be outside the non-terrestrial communication cell 132 (a moving communication cell) provided by the non-terrestrial base station 131 according to the moving plan of the non-terrestrial base station 131 acquired by the operating plan acquisition unit 31. In the example in Figure 2, the communication device identification unit 32 identifies the communication devices 2F, 2G, 2H that may relatively move from inside to outside of the satellite communication cell 132 as the communication satellite 131 passes by. The communication device identification unit 32 also identifies the communication devices 2 (in the example of Figure 2, the communication devices 2F, 2G, 2H, the same as above) in a connection standby state (an idle state) with the non-terrestrial base station 131, which may transfer to an unconnectable state with the non-terrestrial base station 131, when the non-terrestrial base station 131 becomes out of the operating time (i.e., within the non-operating time) acquired by the operating plan acquisition unit 31.

Specifically, the communication device identification unit 32, may measure the position of each communication device 2 by a GPS module and the like installed in each communication device 2 itself, may measure the position of each communication device 2 by a beacon or other positioning module that locates each communication device 2, or may recognize the position of each communication device 2 from various position-related information managed on the core network side, such as location information managed by the TAC or the LMF (Location Management Function). By comparing the location information of each communication device 2 with the ephemeris information, the operation information and the like of the non-terrestrial base station 131 acquired by the operating plan acquisition unit 31, the communication device identification unit 32 can accurately estimate the time at which each communication device 2 would transfer to the unconnectable state with the non-terrestrial base station 131.

The connection control unit 33 causes one or more communication devices 2 in the idle state with the non-terrestrial base station 131 identified by the communication device identification unit 32, to transfer from the idle state to a connected state with the non-terrestrial base station 131 and/or the terrestrial base station 111, 121 (another base station), before transferring to the unconnectable state with the non-terrestrial base station 131. In other words, the communication device 2 in the idle state with the non-terrestrial base station 131 is forced to transfer from the idle state to the connected state before transferring to the unconnectable state with the non-terrestrial base station 131. Specifically, the connection control unit 33 forces the communication device 2 identified by the communication device identification unit 32, to transfer from the idle state to the connected state, before becoming outside the non-terrestrial communication cell 132 as the moving communication cell and/or before the non-terrestrial base station 131 becomes out of the operating time. It should be noted that the connection control unit 33 may restrict or prohibit the communication device 2 that has been forced to transfer to the connected state, from transferring (back) to the idle state for at least a predetermined period of time.

In this way, the communication device 2 can start searching for other base stations (the terrestrial base stations 111 and 121) before becoming "out of range" (the unconnectable state) of the non-terrestrial base station 131, therefore alleviating the concentration of signal processing workload on the core network side. It should be noted that the communication device 2 that is forced to transfer to the connected state by the connection control unit 33, may directly connect to the "post-transfer" terrestrial base station 111, 121 without reconnecting to the "pre-transfer" non-terrestrial base station 131, or may reconnect to the "pre-transfer" non-terrestrial base station 131 to search for the "post-transfer" terrestrial base station 111, 121.

As shown in the example in the figure, in case where TAC "#2" of the location registration area of the "pre-transfer" non-terrestrial communication cell 132 (the non-terrestrial base station 131) is different from TAC "#1" and "#3" of the location registration area of the "post-transfer" terrestrial communication cell 112, 122 (the terrestrial base station 111, 121), the communication devices 2 becoming "out of range" of the non-terrestrial communication cell 132 will register or connect to the terrestrial communication cell 112, 122. This involves a location registration area change, and the core network side needs to process the area change notification of each communication device 2. However, according to the present embodiment, instead of simultaneously transferring each communication device 2 to the terrestrial communication cell 112, 122 upon becoming "out of range" of the non-terrestrial communication cell 132, each communication device 2 can transfer to the terrestrial communication cell 112, 122 in advance before becoming "out of range" of the non-terrestrial communication cell 132. In this way, the concentration of signal processing workload on the core network side can be alleviated, by preventing the concentration of area change notifications of each communication device 2 at the moment when they simultaneously become "out of range" of the non-terrestrial communication cell 132.

As described above, the present embodiment can effectively prevent the concentration of signal processing workload associated with the transfers to the terrestrial communication cell 112, 122 at the moment when the communication devices 2 become "out of range" of the non-terrestrial communication cell 132. In order to further enhance such an effect of distributing signal processing workload, the connection control unit 33 may divide the plurality of communication devices 2 identified by the communication device identification unit 32 into at least two groups. In the illustrated example, N being a natural number greater than or equal to 2, the N or more communication devices 2 identified by the communication device identification unit 32 are divided into N groups (the first group, the second group ... the Nth group). Each group contains at least one communication device 2. The method of grouping the communication devices 2 by the connection control unit 33 is arbitrary. For example, the plurality of communication devices 2 may be randomly divided into N groups based on a random number. The grouping may also be based on the identification information of the communication devices 2 such as IMEI (International Mobile Equipment Identity). For example, the communication devices 2 may be divided into N groups, according to the remainder (0, 1 ... N-1) obtained by dividing the IMEI by N.

The connection control unit 33 may transfer each group of communication devices 2 from the idle state to the connected state at different transfer times. Specifically, the connection control unit 33: transfers the first group of communication devices 2 from the idle state to the connected state at a first transfer time; transfers the second group of communication devices 2 from the idle state to the connected state at a second transfer time; and thereafter in the same manner, transfers the Nth group of communication devices 2 from the idle state to the connected state at a Nth transfer time. Here, the first transfer time to the Nth transfer time are different from each other, and all of them are the times before each group of communication devices 2 transfers to the unconnectable state with the non-terrestrial base station 131. In this way, by staggering the transfer times at which each group of communication devices 2 transfers from the idle state to the connected state, the signal processing workload on the core network side can be further distributed in time.

It should be noted that the connection control unit 33 may transfer only some of the plurality of communication devices 2 identified by the communication device identification unit 32 (e.g., the first to the N-1st groups of communication devices 2) from the idle state to the connected state before they are transferred to the unconnectable state with the non-terrestrial base station 131. In this case, the Nth group of communication devices 2 will search for other available base stations (the terrestrial base stations 111, 121) for attempting to connect, after transferring to the unconnectable state with the non-terrestrial base station 131. However, this does not substantially overlap with the signal processing for the transfer of the other first to N-1 groups of communication devices 2, thereby avoiding a situation where the signal processing workload on the core network side intensively increases.

The present disclosure has been described above based on embodiments. It is obvious to those skilled in the art that various variations are possible in the combination of each component and/or each process in the exemplary embodiments, and that such variations are also encompassed within the scope of the present disclosure.

In the embodiment, the case where the non-terrestrial base station 131 as the moving base station moves relative to the communication device 2 was described, but the similar processes can be applied to a case where the communication device 2 moves relative to, for example, the terrestrial base station 111, 121 as the fixed base station. For example, the location of the terrestrial base station 111, 121 or the communication range of the terrestrial communication cell 112, 122 is recognized by the operating plan acquisition unit 31, and the location or the moving plan of each communication device 2 is recognized by the communication device identification unit 32. By comparing the information concerning the terrestrial base station 111, 121 with the information concerning each communication device 2, the communication device identification unit 32 can accurately estimate the time at which each communication device 2 would transfer to the unconnectable state with the terrestrial base station 111, 121. Then, the connection control unit 33 forces the communication device 2 in the idle state with the terrestrial base station 111, 121 to transfer from the idle state to the connected state, before transferring to the unconnectable state with the terrestrial base station 111, 121.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.
1. A communication control apparatus comprising at least one processor that performs:
   by an operating plan acquisition unit, acquiring an operating plan of a base station;
   by a communication device identification unit, identifying a communication device in a connection standby state with the base station, which may transfer to a unconnectable state with the base station according to the operating plan; and
   by a connection control unit, causing the communication device to transfer from the connection standby state to a connected state with the base station and/or another base station, before transferring to the unconnectable state.
2. The communication control apparatus according to item 1, wherein
   the base station is a moving base station that moves relative to a communication device,
   the operating plan acquisition unit acquires a moving plan of the moving base station,
   the communication device identification unit identifies a communication device in a connection standby state with the moving base station, which may be outside a moving communication cell provided by the moving base station according to the moving plan, and
   the connection control unit causes the communication device to transfer from the connection standby state to a connected state with the moving base station and/or another base station, before becoming outside the moving communication cell.
3. The communication control apparatus according to item 2, wherein the moving base station is a flying non-terrestrial base station.
4. The communication control apparatus according to item 3, wherein the non-terrestrial base station is a communication satellite flying in outer space.
5. The communication control apparatus according to any of items 1 to 4, wherein said another base station is a terrestrial base station that is fixedly installed on the ground.
6. The communication control apparatus according to any of items 1 to 5, wherein
   the operating plan acquisition unit acquires an operating time of the base station,
   the communication device identification unit identifies a communication device in a connection standby state with the base station, which may transfer to a unconnectable state with the base station when the base station is out of the operating time, and
   the connection control unit causes the communication device to transfer from the connection standby state to a connected state with the base station and/or another base station, before the base station goes out of operating time.
7. The communication control apparatus according to any of items 1 to 6, wherein
   the communication device identification unit identifies a plurality of communication devices in a connection standby state with the base station, which may transfer to a unconnectable state with the base station according to the operating plan, and
   the connection control unit divides the plurality of communication devices into at least two groups: a first group that transfers to the connected state at a first transfer time before transferring to the unconnectable state; and a second group that transfers to the connected state at a second transfer time different from the first transfer time before transferring to the unconnectable state.
8. The communication control apparatus according to item 7, wherein the connection control unit divides the plurality of communication devices into the first group and the second group based on a random number.
9. The communication control apparatus according to any of items 1 to 8, wherein
   the communication device identification unit identifies a plurality of communication devices in a connection standby state with the base station, which may transfer to a unconnectable state with the base station according to the operating plan, and
   the connection control unit causes some of the plurality of communication devices to transfer to the connected state, before transferring to the unconnectable state.
10. The communication control apparatus according to any of items 1 to 9, wherein the base station and said another base station belong to different location registration areas.
11. A communication control method comprising:
   acquiring an operating plan of a base station;
   identifying a communication device in a connection standby state with the base station, which may transfer to a unconnectable state with the base station according to the operating plan; and
   causing the communication device to transfer from the connection standby state to a connected state with the base station and/or another base station, before transferring to the unconnectable state.
12. A computer-readable medium storing a communication control program causing a computer to perform:
   acquiring an operating plan of a base station;
   identifying a communication device in a connection standby state with the base station, which may transfer to a unconnectable state with the base station according to the operating plan; and
   causing the communication device to transfer from the connection standby state to a connected state with the base station and/or another base station, before transferring to the unconnectable state.

The present disclosure relates to transfer of communication device to connected state according to operating plan of base station.

1 wireless communication system, 2 communication device, 3 communication control apparatus, 11 5G wireless communication system, 12 4G wireless communication system, 13 satellite communication system, 31 operating plan acquisition unit, 32 communication device identification unit, 33 connection control unit, 111 5G base station, 112 5G cell, 121 4G base station, 122 4G cell, 131 communication satellite, 132 satellite communication cell, 133 gateway.

## Claims

1. A communication control apparatus comprising at least one processor that performs:
by an operating plan acquisition unit, acquiring an operating plan of a base station;
by a communication device identification unit, identifying a communication device in a connection standby state with the base station, which may transfer to a unconnectable state with the base station according to the operating plan; and
by a connection control unit, causing the communication device to transfer from the connection standby state to a connected state with the base station and/or another base station, before transferring to the unconnectable state.

2. The communication control apparatus according to claim 1, wherein
the base station is a moving base station that moves relative to a communication device,
the operating plan acquisition unit acquires a moving plan of the moving base station,
the communication device identification unit identifies a communication device in a connection standby state with the moving base station, which may be outside a moving communication cell provided by the moving base station according to the moving plan, and
the connection control unit causes the communication device to transfer from the connection standby state to a connected state with the moving base station and/or another base station, before becoming outside the moving communication cell.

3. The communication control apparatus according to claim 2, wherein the moving base station is a flying non-terrestrial base station.

4. The communication control apparatus according to claim 3, wherein the non-terrestrial base station is a communication satellite flying in outer space.

5. The communication control apparatus according to claim 1, wherein said another base station is a terrestrial base station that is fixedly installed on the ground.

6. The communication control apparatus according to claim 1, wherein
the operating plan acquisition unit acquires an operating time of the base station,
the communication device identification unit identifies a communication device in a connection standby state with the base station, which may transfer to a unconnectable state with the base station when the base station is out of the operating time, and
the connection control unit causes the communication device to transfer from the connection standby state to a connected state with the base station and/or another base station, before the base station goes out of operating time.

7. The communication control apparatus according to claim 1, wherein
the communication device identification unit identifies a plurality of communication devices in a connection standby state with the base station, which may transfer to a unconnectable state with the base station according to the operating plan, and
the connection control unit divides the plurality of communication devices into at least two groups: a first group that transfers to the connected state at a first transfer time before transferring to the unconnectable state; and a second group that transfers to the connected state at a second transfer time different from the first transfer time before transferring to the unconnectable state.

8. The communication control apparatus according to claim 7, wherein the connection control unit divides the plurality of communication devices into the first group and the second group based on a random number.

9. The communication control apparatus according to claim 1, wherein
the communication device identification unit identifies a plurality of communication devices in a connection standby state with the base station, which may transfer to a unconnectable state with the base station according to the operating plan, and
the connection control unit causes some of the plurality of communication devices to transfer to the connected state, before transferring to the unconnectable state.

10. The communication control apparatus according to claim 1, wherein the base station and said another base station belong to different location registration areas.

11. A communication control method comprising:
acquiring an operating plan of a base station;
identifying a communication device in a connection standby state with the base station, which may transfer to a unconnectable state with the base station according to the operating plan; and
causing the communication device to transfer from the connection standby state to a connected state with the base station and/or another base station, before transferring to the unconnectable state.

12. A computer-readable medium storing a communication control program causing a computer to perform:
acquiring an operating plan of a base station;
identifying a communication device in a connection standby state with the base station, which may transfer to a unconnectable state with the base station according to the operating plan; and
causing the communication device to transfer from the connection standby state to a connected state with the base station and/or another base station, before transferring to the unconnectable state.
